# EUROPÄISCHE PATENTSCHRIFT

(11) **EP 1 671 837 B1**
(45) Veröffentlichungstag und Bekanntmachung des Hinweises auf die Patenterteilung: **03.08.2011**
(21) Anmeldenummer: 05019384.6
(22) Anmeldetag: 07.09.2005
(51) Int. Cl.: B60N 2/14, B60N 2/38, B60N 2/02, A01D 43/07, A01D 67/04, A01D 43/073

(54) **Verschwenkbarer Fahrersitz innerhalb einer Fahrerkabine einer landwirtschaftlichen Arbeitsmaschine**
Pivotable driver seat within a driver cabin of an agricultural vehicle
Siège de conducteur pivotant dans une cabine de conduit d'un véhicule agricole

(30) Priorität: 08.11.2004 DE 102004054144
(43) Veröffentlichungstag der Anmeldung: 21.06.2006
(73) Patentinhaber: CLAAS Selbstfahrende Erntemaschinen GmbH, 33428 Harsewinkel (DE)
(72) Erfinder: Pöhl, Peter, 41540 Dormagen (DE)

(56) Entgegenhaltungen:
- EP-A- 1 468 598
- DE-A1- 4 015 966
- JP-A- 52 121 219
- JP-A- 63 162 347
- JP-U- 58 075 039
- US-A- 5 921 340

## Beschreibung

Die Erfindung betrifft einen verschwenkbaren Fahrersitz innerhalb einer Fahrerkabine einer Arbeitsmaschine gemäß dem Oberbegriff des Anspruchs 1.

Herkömmliche Fahrersitze In landwirtschaftlichen Arbeitsmaschinen, wie beispielsweise Traktoren, selbstfahrende Feldhäcksler oder selbstfahrende Mähdrescher, sind unmittelbar vor der Lenksäule der landwirtschaftlichen Arbeitsmaschine angeordnet und um einen festen Drehpunkt im Mittelpunkt des Fahrersitzes bewegbar ausgeführt. Eine solche Anordnung wird In der DE 197 23 824 A 1 fenbart. Der um einen im Mittelpunkt des Fahrersitzes angeordneten Drehpunkt verschwenkbare Fahrersitz kann zur besseren Überwachung des Überladevorganges in etwa um 90° um diesen Drehpunkt verschwenkt werden.

Nachteilig an dieser Ausführung ist insbesondere, dass aufgrund der festen Anordnung des Drehpunktes innerhalb des Fahrersitzes der Fahrer eine eingeschränkte Bewegungsfreiheit genießt, da er bei jeder größeren Drehbewegung mit seinen Beinen gegen die Lenksäule der landwirtschaftlichen Erntemaschine stößt. Außerdem ist eine sichere Lenkung der Erntemaschine, insbesondere in Kurvenfahrten, für den Fahrer schwer zu bewerkstelligen, da der Fahrer in der zuvor genannten 90° Position einen schlechten Zugriff auf das Lenkrad hat.

Aus der US 5 921 340 A ist ein verschwenkbarer Fahrersitz innerhalb der Fahrer kabine eines Gabelstaplers bekannt. Zur Ermöglichung einer komfortablen Verschwenkung des Sitzes und zur Ermöglichung des Zugriffs auf das Lenkrad in den verschiedenen Schwenkpositionen des Sitzes liegt die Drehachse des Fahrersitzes beabstandet vom Fahrersitz, und zwar im Fußraum, In der Nähe des Rückwärtsfahrpedals. Durch die Anordnung wird dem Fahrer eine erhöhte Beinfreiheit gewährt.

Auch aus den Schriften JP 63182347, JP 52121219, JP 5875039 sind Fahrersitze bekannt, die sich um eine außerhalb des Fahrersitzes liegende Schwenkachse verschwenken lassen.

In der DE 40 15 966 A1 wird für einen drehbaren Fahrersitz eine Arretierungsmechanik beschrieben.

Aus der EP 1 468 598 A2 ist eine landwirtschaftliche Arbeitsmaschine in Form eines Feldhäckslers bekannt Der Feldhäcksler weist eine Fahrerkabine auf, die sich abhängig vom Betriebszustand des Feldhäckslers aus einer Streßenbetriebsposition in einer Häckselbetriebsposition und umgekehrt verschwenken lässt Der Feldhäcksler ist damit in zwei Richtungen betreibbar.

Aufgabe der zugrundeliegenden Erfindung ist es, einen verschwenkbaren Fahrersitz der eingangs genannten Art anzugeben, der sich auf besondere Weise zum Einsatz in einer landwirtschaftlichen Arbeitsmaschine mit einer verschwenkbaren Überladevorrichtung eignet

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung In vorteilhafter Weise weiterentwickeln.

Der erfindungsgemäße Fahrersitz erleichtert auf vorteilhafte Weise die Beobachtung des Überladevorgangs von dem geernteten Erntegut auf ein neben der landwirtschaftlichen Erntemaschine her fahrendes Transportfahrzeug, da der Bediener durch die vorgesehene automatische Verstellung des Sitzes entlastet wird.

Dadurch, dass der Momentanpol des Fahrersitzes mit der Lenksäule der landwirtschaftlichen Arbeitsmaschine zusammenfallen kann, wird dem Fahrer ermöglicht sich mitsamt des Fahrersitzes um die Lenksäule herum zu bewegen, ohne dass der Abstand des Fahrersitzes zur Lenksäule verändert wird. Hierdurch wird eine günstige Bedienbarkeit der Lenkung der landwirtschaftlichen Arbeitsmaschine unabhängig von der Sitzposition des Fahrers gewährleistet.

Auf konstruktiv einfache Weise kann die Schwenkbewegung des Fahrersitzes mittels eines verstellbaren Gelenkmechanismus bewirkt werden, wobei der Momentenpol des Gelenkmechanismus außerhalb des Fahrersitzes liegt. Im einfachsten Fall kann der Gelenkmechanismus als, eine hohe Funktionssicherheit aufweisender Viergelenkmechanismus ausgeführt sein.

Zur einfachen und kostengünstigen Verstellbarkelt des Fahrersitzes ist der Fahrersitz auf einem Adapter angeordnet, wobei der Adapter von zumindest einem Oberteil und wenigstens einem Unterteil gebildet wird und beide zwischen sich den Gelenkmechanismus aufnehmen.

Durch die feste Verbindung des Oberteils mit dem Fahrersitz und die feste Verbindung des Unterteils mit dem Boden der Fahrerkabine, wobei das Oberteil gegenüber dem Unterteil bewegbar ist, kann der Fahrersitz von dem Fahrer in die gewünschte und bequemste Position verschwenkt werden, so dass der Fahrer durch eine angenehme Sitzposition während der Erntefahrt eine Entlastung erfährt. Die kostengünstige Verbindung des Oberteils mit dem Unterteil wird durch die Integration des Gelenkmechanismus zwischen Ober- und Unterteil des Adapters bauraumsparend erreicht.

Auf konstruktiv einfache Weise sind die Lenker des Viergelenkmechanismus über an sich bekannte Verbindungselement bewegbar in das Oberteil und in das Unterteil des Adapters integriert.

Damit der Fahrer der landwirtschaftlichen Arbeitsmaschine eine sichere Sitzposition erhält ist der Fahrersitz arretierbar ausgeführt.

Um ein einfaches und sicheres Verschwenken und Arretieren des Fahrersitzes zu gewährleisten, erfolgt das Verschwenken und Arretieren über einen Hebel, der in einer in dem Unterteil des Adapters eingelassenen Kulisse geführt wird.

In vorteilhafter Weiterbildung der Erfindung ist die Kulisse bogenförmig ausgeführt und weist Aussparrungen auf, in denen der Hebel zur Arretierung des Fahrersitzes hinein verfährt. Die Anzahl der Aussparrungen definiert dabei die fest einstellbaren und verschiedenen Positionen des Fahrersitzes.

Durch die plattenförmige Ausbildung des Ober- und Unterteils des Adapters wird dem Fahrersitz, unabhängig von seiner aktuellen Position, aufgrund der großen Aufstandsfläche des Ober- und Unterteils, eine hohe Stabilität verliehen.

Weitere vorteilhafte Ausgestaltungen sind Gegenstand weiterer Unteransprüche und werden nachfolgend anhand von Zeichnungen näher erläutert.

Es zeigen:
- Figur 1:: eine Draufsicht auf einen Feldhäcksler mit unterschiedliche positio- nierten Überladefahrzeugen
- Figur 2:: die Grundstellung eines drehbaren Fahrersitzes innerhalb einer Fah- rerkabine
- Figur 3:: einen rechtsseitig in Fahrtrichtung der landwirtschaftlichen Arbeits- maschine verschwenkten Fahrereitz nach Figur 2

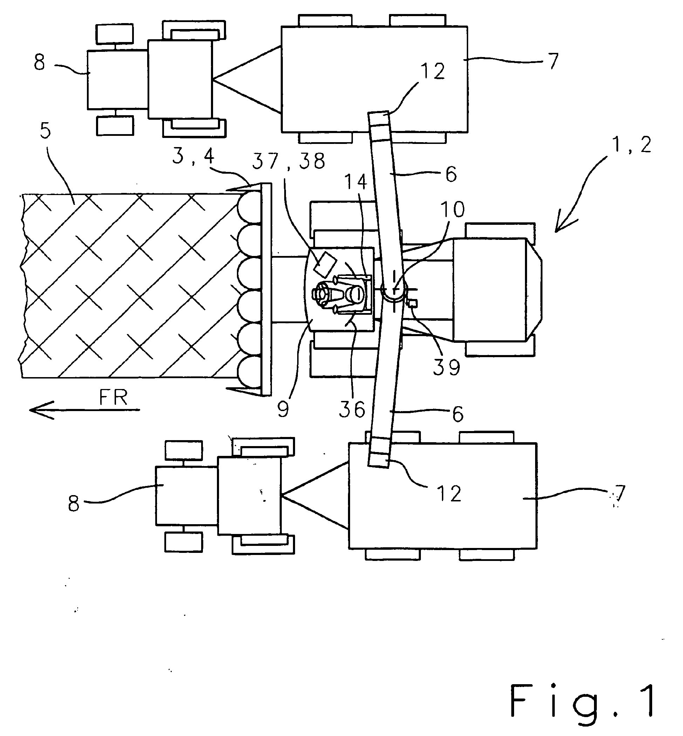

In der Figur 1 wird eine als selbstfahrender Feldhäcksler 1 ausgeführte landwirtschaftliche Arbeitsmaschine 2 in Draufsicht dargestellt. Frontseitig ist dem Feldhäcksler 1 ein Vorsatzgerät 3, vorliegend ein Maisgebiss 4, zugeordnet, welches das Erntegut 5 schneidet, aufnimmt und einer nicht abgebildeten Häckselvorrichtung zuführt. Das zerkleinerte Erntegut 5 wird dann über eine Überladevorrichtung 6 an eine Transportvorrichtung 7 übergeben. Die Transportvorrichtung 7 ist an einem Schlepper 8 adaptiert, der im Idealfall parallel neben dem Feldhäcksler 1 oder unmittelbar hinter dem Schlepper 8 fährt.

In an sich bekannter Weise ist die hinter der Fahrerkabine 9 angeordnete Überladevorrichtung 6 um zumindest eine vertikale Drehachse 10 verschwenkbar. Darüber hinaus kann die Weite des ausgeworfenen Erntegutstrahl durch eine auf- und absenkbare Oberladeklappe 12 gesteuert werden.

Während der Erntefahrt stellt sich für den Fahrer einer landwirtschaftlichen /arbeitsmaschine 2 das Problem, das Erntegut 5 in Fahrtrichtung der sich bewegenden Arbeitsmaschine 2 gleichmäßig abzuernten, ohne dass einen Restbestand auf dem Feld zurückzulassen. Darüber hinaus muss der Fahrer gleichzeitig eine sichere und verlustarme Überladung des bearbeiteten Ernteguts 5 auf die Transportvorrichtung 7 gewährleisten. In Bezug auf die Übergabe des Ernteguts 5 an die Transportvorrichtung 7 muss der Fahrer des Feldhäckslers 1 den Überladebereich permanent beobachten, damit der Erntegutstrahl die Transportvorrichtung 7 trifft. Dies führt für den Fahrer neben der exakten Spurführung des Feldhäckslers 1 während des Erntevorganges zu einer zusätzlichen Belastung.

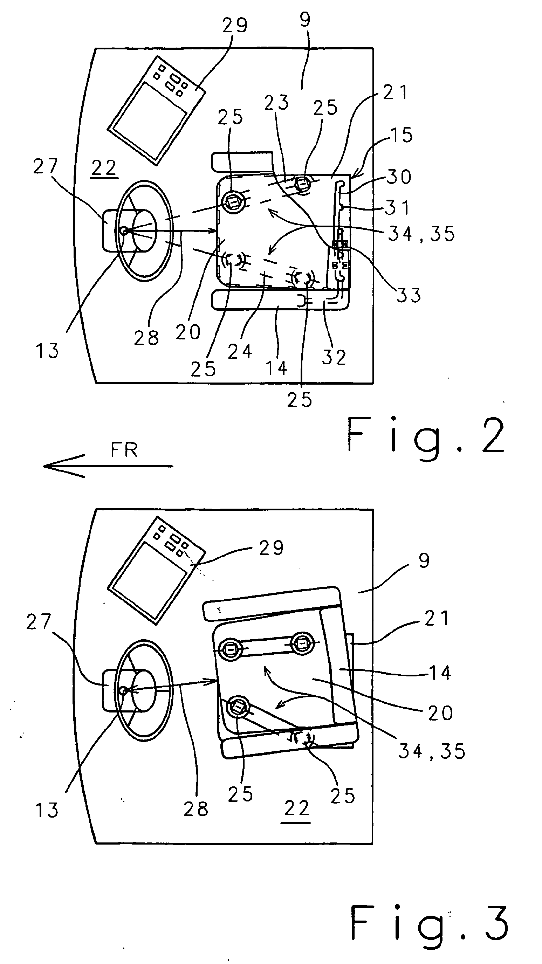

Um den Fahrer des Feldhäckslers 1 zu entlasten und ihm hinreichend Bewegungsfreiheit innerhalb der Fahrerkabine 9 zu ermöglichen, ist der in der Figur 2 abgebildete Momentanpol 13 der Verschwenkbewegung des Fahrersitzes 14 erfindungsgemäß außerhalb des Fahrersitzes 14 angeordnet, wobei Figur 2 zunächst die Grundstellung eines drehbaren Fahrersitzes 14 innerhalb der Fahrerkabine 9 einer landwirtschaftlichen Arbeitsmaschine 2 dargestellt.

Der Fahrersitz 14 ist auf einem Adapter 15 angeordnet. Der Adapter 15 ist aus zumindest einem Oberteil 20 und wenigstens einem Unterteil 21 zusammengesetzt. Das Oberteil 20 des Adapters 15 ist mit der Unterseite des Fahrersitzes 14 und das Unterteil 21 des Adapters 15 ist mit dem Boden 22 der Fahrerkabine 9 verbunden.

Vorzugsweise sind das Oberteil 20 und das Unterteil 21 des Adapters 15 plattenförmig ausgebildet. Erfindungsgemäß nehmen das Oberteil 20 und das Unterteil 21 des Adapters 21 zwischen sich einen als Viergelenkmechanismus 35 ausgeführten Gelenkmechanismus 34 auf. Der Vlergetenkmechanismus wird von einem ersten Lenker 23 und einem zweiten Lenker 24 gebildet und verbindet das Oberteil 20 mit dem Unterteil 21 des Adapters 15 in noch näher zu beschreibender Weise schwenkbeweglich. Im dargestellten Ausführungsbeispiel werden zur Verbindung des Oberteils 20 mit dem Unterteil 21 zwei in Fahrtrichtung FR des Feldhäckslers 1 in der Neutralstellung aufeinander zu laufende Lenker 23, 24 verwendet. Die Lenker 23, 24 stehen über bewegbare Verbindungselemente 25 mit dem Oberteil 20 und dem Unterteil 21 des Adapters 15 in der Weise in Wirkverbindung, dass jeder Lenker 23, 24 einenends schwenkbeweglich mit dem Oberteil 20 und anderenends schwenkbeweglich mit dem Unterteil 21 des Adapters 15 gekoppelt ist. Die Verbindungselemente 25 können als Rollen oder Kugeln ausgeführt sein. Aufgrund dieser beweglichen Verbindung der Lenker 23, 24 mit dem Oberteil 20 und dem Unterteil 21 des Adapters 15 ist das Oberteil 20 gegenüber dem Unterteil 21 bewegbar, so dass der auf dem Oberteil 20 angeordnete Fahrersitz 14 seine Position zur Lenksäule 27 ändern kann.

Die von dem Fahrersitzes 14 zu vollziehende Schwenkbewegung wird dabei durch die Stellung der Lenker 23, 24 des Viergefenkmechanismua 35 zueinander bestimmt Durch die aufeinander zu laufende Lage des Lenkers 23 zu dem Lenker 24 in der Neutralstellung nach Figur 2, liegt der Momentanpol 13 außerhalb des Fahrersitzes 14 und im dargestellten Ausführungsbeispiel fällt dessen Lage mit der Position der Lenksäule 27 zusammen.

Durch die besondere Lage des Momentanpols 13 außerhalb des Fahrersitzes 14 und etwa im Bereich der Lenksäule 27 wird der Fahrersitz 14 gegenüber der Lenksäule 27 in einem annähernd gleichbleibenden Abstand 28 um die Lenksäule 27 geführt, ohne dass die Bewegungsfreiheit des Fahrers bei der Verstellung des Fahrersitzes 14 eingeschränkt wird. Hierdurch erlangt der Fahrer eine günstige Sitzposition und damit einen verbesserten Überblick über die Erntefahrt und den gleichzeitig erfolgenden Erntegutüberladevorgang auf die neben dem Feldhäcksler 1 her fahrende Transportvorrichtung 7. Darüber hinaus erhält der Fahrer des Feldhäckslers 1 eine uneingeschränkte Zugriffsmöglichkeit auf die Lenkung des Feldhäckslers 1, da der Fahrersitz 14 trotz veränderter Position stets optimal zur Lenksäule 27 ausgerichtet ist.

Weiter ist in dem Unterteil 21 des Adapters 15 eine bogenförmige Kulisse 30 mit mehreren Aussparrungen 31 eingelassen. In der Kulisse 30 wird ein Hebel 32 geführt Der Hebel 32 ist mittels zweier Befestigungselemente 33 fest mit dem Oberteil 20 des Adapters 15 verbunden. Durch die Verstellung des Hebels 32 wird das Oberteil 20 und der auf dem Oberteil 20 angeordnete Fahrersitz 14 in die gewünschte Position verschwenkt. Hierbei bleibt das mit dem Boden 22 der Fahrerkabine 9 fest verbundene Unterteil 21 dauerhaft an seiner Stelle.

Um den Fahrersitz 14 in der durch den Fahrer des Feldhäckslers 1 bestimmten Position zu fixieren, ist der Fahrersitz 14 arretierbar. Die Arretierung erfolgt in der Weise, dass der Hebel 32 in die von dem Fahrer ausgewählte Aussparung 31 eingelegt wird und so die optimale und gesicherte Sitzposition des Fahrersitzes 14 in der von dem Fahrer gewählten Einstellung gewährleistet ist. Bei der Einstellung des Fahrersitzes 14 verschwenken die Lenker 23, 24 des Viergelenkmechanismus 35 , so dass mittels der Verbindungselemente 25 das Oberteil 20 gegenüber dem Unterteil 21 bewegt wird.

Durch die bogenförmige Ausführung der Kulisse 30 ist die Bewegung und Arretierung des Fahrersitzes 14 auf einer Kreisbahn möglich, so dass der Abstand zu der Lenksäule 27 unabhängig von der aktuellen Position des Fahrersitzes 14 nahezu unverändert bleibt.

Eine verschwenkte Stellung des Fahrersitzes 14 wird in der Figur 3 näher dargestellt. In der Figur 3 ist das Oberteil 20 des Adapters 15 und damit auch der an dem Oberteil 20 befestigte Fahrersitz 14 rechtsseitig in Fahrtrichtung FR des Feldhäckslers 1 verschwenkt. Das Unterteil 21 des Adapters 15 ist drehfest mit dem Boden 22 der Fahrerkabine 9 verbunden. Aufgrund der aufeinander zu laufenden Anordnung der bewegbaren Lenker 23, 24 zueinander und der dadurch bedingten Position des Momentanpols 13 im Bereich der Lenksäule 27, bleibt der Abstand 28 zur Lenksäule 27 nahezu unverändert. Auf diese Weise hat der Fahrer des Feldhäckslers 1 eine dauerhafte und bequeme Möglichkeit der Bedienung der Lenksäule 27 und der in der Fahrerkabine 9 angeordneten Funktionsschalter und - elemente 29. Zudem hat der Fahrer in der abgebildeten Stellung des Fahrersitzes 14 einen verbesserten Überblick über den gesamten Erntegutüberladevorgang auf die in Fahrtrichtung FR des Feldhäckslers 1 neben her fahrende Transportvorrichtung 7. Die in Fahrtrichtung FR des Feldhäckslers 1 linksseitige Verstellung des Fahrersitzes 14 erfolgt In gleicher Weise wie die zuvor beschriebene rechtsseitige Verstellung des Fahrersitzes 14.

In einer vorteilhaften Ausgestaltung der Erfindung kann gemäß Figur 1 die mögliche Bewegungsbahn 36 des Fahrersitzes 14 in Form von Kennlinien 37 in einer Steuereinrichtung 38 hinterlegt sein. Zugleich kann die Bewegung der Überladevorrichtung in an sich bekannter Weise durch Sensoren 39 erfasst werden, deren Positionssignale an die Steuereinheit 38 übergeben werden. Indem die Kennlinien 37 in Abhängigkeit von der Position der Überladevorrichtung 6 hinterlegt sind, kann die Steuereinrichtung 38 nunmehr der Position der Überiadevorrichtung eine konkrete Position des Fahrersitzes 14 zuordnen, die dann im einfachsten Fall durch automatische Verstellung des in den Adapter 15 integrierten Hebels 32 eingestellt wird. Damit diese automatische Verstellung des Fahrersitzes möglich wird, kann dem Hebel 32 in nicht dargestellter Weise im einfachsten Fall ein Verstellmotor zugeordnet sein, welcher unmittelbar von der Steuereinrichtung ansteuerbar ist.

Es liegt im Rahmen des Könnens eines Fachmanns das beschriebene Ausführungsbeispiel in nicht dargestellter Weise abzuwandeln oder in anderen Maschinen einzusetzen, um die beschriebenen Effekte zu erzielen, ohne dabei den Rahmen der Erfindung gemäß den Ansprüchen zu verlassen.

### Bezuorzeichenliste:

- 1: selbstfahrender Feldhäcksler
- 2: landwirtschaftliche Arbeitsmaschine
- 3: Vorsatzgerät
- 4: Maisgebiss
- 5: Erntegut
- 6: Überladevorrichtung
- 7: Transportvorrichtung
- 8: Schlepper
- 9: Fahrerkabine
- 10: vertikale Drehachse
- 11:
- 12: Überladeklappe
- 13: Momentanpol
- 14: Fahrersitz
- 15: Adapter
- 20: Oberteil
- 21: Unterteil
- 22: Boden
- 23: Lenker
- 24: Lenker
- 25: Verbindungselemente
- 26:
- 27: Lenksäule
- 28: Abstand
- 29: Funktionselemente
- 30: Kulisse
- 31: Aussparung
- 32: Hebel
- 33: Befestigungselemente
- 34: Gelenkmechanismus
- 35: Viergelenkmechanismus
- 36: Bewegungsbahn
- 37: Kennlinie
- 38: Steuerung
- 39: Sensor

- FR: Fahrtrichtung

## Patentansprüche

1. Verschwenkbarer Fahrersitz (14) innerhalb einer Fahrerkabine (9) einer Arbeitsmaschine (2) mit integrierter Lenksäule (27), wobei der Momentanpol (13) der Schwenkbewegung des Fahrersitzes (14) außerhalb des Fahrersitzes (14) liegt,
**dadurch gekennzeichnet, dass** das Verschwenken des Fahrersitzes (14) manuell und automatisch erfolgen kann, wobei es sich bei der Arbeitsmaschine (2) um eine landwirtschaftliche Arbeitsmaschine handelt, der eine Überladevorrichtung (6) zugeordnet ist, und wobei das automatische Verschwenken des Fahrersitzes (14) an die Verschwenkbewegung der Überladevorrichtung (6) gekoppelt ist.

2. Verschwenkbarer Fahrersitz (14) nach Anspruch 1,
**dadurch gekennzeichnet, dass**
der Momentanpol (13) des Fahrersitzes (14) mit der Lenksäule (27) der landwirtschaftlichen Arbeitsmaschine (2) zusammenfällt.

3. Versohwenkbarer Fahrersitz (14) nach einem oder mehreren der vorangegangen Ansprüche,
**dadurch gekennzeichnet,**
**dass** die Schwenkbewegung des Fahrersitzes (14) mittels eines verstellbaren Gelenkmechanismus (34) bewirkt wird.

4. Verschwenkbarer Fahrersitz (14) nach Anspruch 3,
**dadurch gekennzeichnet, dass**
der Gelenkmechanismus (34) als Viergelenkmechanismus (35) mit einem ersten Lenker (23) und einem zweiten Lenker (24) ausgebildet ist.

5. Verschwenkbarer Fahrersitz (14) nach einem oder mehreren der vorangegangen Ansprüche,
**dadurch gekennzeichnet, dass**
der Fahrersitz (14) auf einem Adapter (15) angeordnet ist.

6. Verschwenkbarer Fahrersitz (14) nach Anspruch 4 und 5,
**dadurch gekennzeichnet, dass**
der Adapter (15) von zumindest einem Oberteil (20) und wenigstens einem Unterteil (21) gebildet wird und wobei das wenigstens eine Oberteil (20) und das wenigstens eine Unterteil (21) zwischen sich den Gelenkmechanismus (34) aufnehmen.

7. Verschwenkbarer Fahrersitz (14) nach Anspruch 6,
**dadurch gekennzeichnet, dass**
das Oberteil (20) fest mit dem Fahrersitz (14) und das Unterteil (21) fest mit dem Boden der Fahrerkabine (9) verbunden ist, wobei das zumindest eine Oberteil (20) gegenüber dem wenigstens einem Unterteil (21) mittels des Gelenkmechanismus (34) verschwenkbar ist.

8. Verschwenkbarer Fahrersitz (14) nach Anspruch 6 oder 7,
**dadurch gekennzeichnet, dass**
das Oberteil (20) und das Unterteil (21) des Adapters (15) über zumindest einen Lenker (23, 24) des Gelenkmechanismus (34) miteinander verbunden sind.

9. Verschwenkbarer Fahrersitz (14) nach einem der Ansprüche 6 bis 8,
**dadurch gekennzeichnet**,
die Lenker (23, 24) über jeweils zumindest ein Verbindungselement (25) bewegbar in das Oberteil (20) und in das Unterteil (21) des Adapters (15) Integriert sind.

10. Verschwenkbarer Fahrersitz (14) nach einem oder mehreren der vorangegangen Ansprüche,
**dadurch gekennzeichnet, dass**
der Fahrersitz (14) arretierbar ist.

11. Verschwenkbarer Fahrersitz (14) nach Anspruch 10,
**dadurch gekennzeichnet, dass**
die Arretierung und das Verschwenken des Fahrersitzes (14) durch einen Hebel (32) erfolgt.

12. Verschwenkbarer Fahrersitz (14) nach Anspruch 11,
**dadurch gekennzeichnet, dass**
der Hebel (32) innerhalb einer in das Unterteil (21) eingelassenen Kulisse (30) geführt wird.

13. Verschwenkbarer Fahrersitz (14) nach Anspruch 12,
**dadurch gekennzeichnet, dass**
die Kulisse (30) bogenförmig ausgeführt ist und Aussparrungen (31) zur Arretierung des Fahrersitzes (14) aufweist.

14. Verschwenkbarer Fahrersitz (14) nach einem der Ansprüche 6 bis 13,
**dadurch gekennzeichnet, dass**
das Oberteil (20) und/oder das Unterteil (21) plattenförmig ausgebildet ist/sind.

## Claims

1. A pivotable driver's seat (14) within a driver's cab (9) of a working machine (2) with integrated steering column (26, 27), wherein the instantaneous centre of rotation (13) of the pivotal movement of the driver's seat (14) is outside the driver's seat (14),
**characterised in that** the pivotal movement of the driver's seat (14) can be effected manually and automatically, wherein the working machine (2) is an agricultural working machine with which a transloading apparatus (6) is associated and wherein the automatic pivotal movement of the driver's seat (14) is coupled to the pivotal movement of the transloading apparatus (6).

2. A pivotable driver's seat (14) according to claim 1 **characterised in that** the instantaneous centre of rotation (13) of the driver's seat (14) coincides with the steering column (27) of the agricultural working machine (2).

3. A pivotable driver's seat (14) according to one or more of the preceding claims **characterised in that** the pivotal movement of the driver's seat (14) is produced by means of a displaceable joint mechanism (34).

4. A pivotable driver's seat (14) according to claim 3 **characterised in that** the joint mechanism (34) is in the form of a four-joint mechanism (35) having a first link (23) and a second link (24).

5. A pivotable driver's seat (14) according to one or more of the preceding claims **characterised in that** the driver's seat (14) is arranged on an adaptor (15).

6. A pivotable driver's seat (14) according to claim 4 and claim 5 **characterised in that** the adaptor (15) is formed by at least one upper portion (20) and at least one lower portion (21) and wherein the at least one upper portion (20) and the at least one lower portion (21) receive the joint mechanism (34) between them.

7. A pivotable driver's seat (14) according to claim 5 **characterised in that** the upper portion (20) is fixedly connected to the driver's seat (14) and the lower portion (21) is fixedly connected to the floor of the driver's cab (9), wherein the at least one upper portion (20) is pivotable with respect to the at least one lower portion (21) by means of the joint mechanism (34).

8. A pivotable driver's seat (14) according to claim 6 or claim 7 **characterised in that** the upper portion (20) and the lower portion (21) of the adaptor (15) are connected together by way of at least one link (23, 24) of the joint mechanism (34).

9. A pivotable driver's seat (14) according to one of claims 6 to 8 **characterised in that** the links (23, 24) are integrated into the upper portion (20) and into the lower portion (21) of the adaptor (15) movably by way of at least one respective connecting element (25).

10. A pivotable driver's seat (14) according to one or more of the preceding claims **characterised in that** the driver's seat (14) can be arrested.

11. A pivotable driver's seat (14) according to claim 10 **characterised in that** arresting and pivotal movement of the driver's seat (14) are effected by a lever (32).

12. A pivotable driver's seat (14) according to claim 11 **characterised in that** the lever (32) is guided within a sliding guide (30) let into the lower portion (21).

13. A pivotable driver's seat (14) according to claim 12 **characterised in that** the sliding guide (30) is arcuate and has recesses (31) for arresting the driver's seat (14).

14. A pivotable driver's seat (14) according to one of claims 6 to 13 **characterised in that** the upper portion (20) and/or the lower portion (21) is/are of a plate-shaped configuration.

## Revendications

1. Siège conducteur (14) pivotant dans une cabine de conducteur (9) d'une machine de travail (2) avec une colonne de direction intégrée (27), dans lequel le centre instantané de rotation (13) du mouvement de pivotement du siège conducteur (14) se situe en dehors du siège conducteur (14),
**caractérisé en ce que** le pivotement du siège conducteur (14) peut être effectué manuellement et automatiquement, dans lequel il s'agit dans le cas de la machine de travail (2) d'une machine de travail agricole, à laquelle est aménagé un dispositif de transbordement (6), et dans lequel le pivotement automatique du siège conducteur (14) est couplé au mouvement de pivotement du dispositif de transbordement (6).

2. Siège conducteur (14) pivotant selon la revendication 1,
**caractérisé en ce que**
le centre instantané de rotation (13) du siège conducteur (14) coïncide avec la colonne de direction (27) de la machine de travail agricole (2).

3. Siège conducteur (14) pivotant selon l'une quelconque des revendications précédentes,
**caractérisé en ce que**
le mouvement de pivotement du siège conducteur (14) est provoqué au moyen d'un mécanisme à articulation (34) réglable.

4. Siège conducteur (14) pivotant selon la revendication 3,
**caractérisé en ce que**
le mécanisme à articulation (34) se présente sous la forme d'un mécanisme à quatre articulations (35) avec une première bielle (23) et une seconde bielle (24).

5. Siège conducteur (14) pivotant selon l'une quelconque des revendications précédentes,
**caractérisé en ce que**
le siège conducteur (14) est agencé sur un adaptateur (15).

6. Siège conducteur (14) pivotant selon les revendications 4 et 5, **caractérisé en ce que**
l'adaptateur (15) est formé par au moins une partie supérieure (20) et au moins une partie inférieure (21) et dans lequel la au moins une partie supérieure (20) et la au moins une partie inférieure (21) reçoivent entre elles le mécanisme à articulation (34).

7. Siège conducteur (14) pivotant selon la revendication 6,
**caractérisé en ce que**
la partie supérieure (20) est reliée de manière fixe au siège conducteur (14) et la partie inférieure (21) est reliée de manière fixe au sol de la cabine de conducteur (9), dans lequel la au moins une partie supérieure (20) peut pivoter par rapport à la au moins une partie inférieure (21) au moyen du mécanisme à articulation (34).

8. Siège conducteur (14) pivotant selon la revendication 6 ou 7,
**caractérisé en ce que**
la partie supérieure (20) et la partie inférieure (21) de l'adaptateur (15) sont reliées l'une à l'autre par le biais d'au moins une bielle (23, 24) du mécanisme à articulation (34).

9. Siège conducteur (14) pivotant selon l'une quelconque des revendications 6 à 8,
**caractérisé en ce que**
les bielles (23, 24) peuvent être déplacées respectivement par le biais d'au moins un élément de liaison (25) dans la partie supérieure (20) et sont intégrées à la partie inférieure (21) de l'adaptateur (15).

10. Siège conducteur (14) pivotant selon l'une quelconque ou plusieurs des revendications précédentes,
**caractérisé en ce que**
le siège conducteur (14) peut être bloqué.

11. Siège conducteur (14) pivotant selon la revendication 10,
**caractérisé en ce que**
le blocage et le pivotement du siège conducteur (14) sont effectués par un levier (32).

12. Siège conducteur (14) pivotant selon la revendication 11,
**caractérisé en ce que**
le levier (32) est guidé dans une coulisse (30) encastrée dans la partie inférieure (21).

13. Siège conducteur (14) pivotant selon la revendication 12,
**caractérisé en ce que**
la coulisse (30) est conformée en arc et présente des cavités (31) pour bloquer le siège conducteur (14).

14. Siège conducteur (14) pivotant selon l'une quelconque des revendications 6 à 13,
**caractérisé en ce que**
la partie supérieure (20) et/ou la partie inférieure (21) se présente(nt) sous la forme d'une plaque.
